# EUROPEAN PATENT SPECIFICATION

(11) **EP 3 094 006 B1**
(45) Date of publication and mention of the grant of the patent: **10.04.2019**
(21) Application number: 14883289.2
(22) Date of filing: 20.02.2014
(51) Int. Cl.: H04B 1/56

(54) **SIGNAL TRANSMISSION METHOD AND SYSTEM AND CONTROLLER**
SIGNALÜBERTRAGUNGSVERFAHREN UND SYSTEM SOWIE STEUERUNG
PROCÉDÉ ET SYSTÈME D'ÉMISSION DE SIGNAL ET DISPOSITIF DE COMMANDE

(43) Date of publication of application: 16.11.2016
(73) Proprietor: Huawei Device (Dongguan) Co., Ltd., Dongguan, Guangdong, PRC, 523808 (CN)
(72) Inventor: XU, Haowei, Shenzhen, Guangdong 518129 (CN); HUANG, Jianren, Shenzhen, Guangdong 518129 (CN)
(74) Representative: Körber, Martin Hans
(86) International application number: PCT/CN2014/072330
(87) International publication number: WO 2015/123846

(56) References cited:
- EP-A1- 2 577 874
- WO-A2-2010/104767
- CN-A- 102 064 845
- CN-A- 102 064 845
- CN-A- 102 934 366
- CN-A- 103 141 154
- US-A1- 2006 030 265
- US-A1- 2008 253 345
- US-A1- 2011 111 708

## Description

### TECHNICAL FIELD

The present invention relates to the communications field, and in particular, to a signal transmission method and system, and a controller.

### BACKGROUND

At present, most communications devices use technologies such as simultaneous Global System For Mobile Communications (GSM, Global System For Mobile Communications) and Long Term Evolution (LTE, Long Term Evolution) (SGLTE, Simultaneous GSM and LTE), and simultaneous voice and LTE (SVLTE, Simultaneous Voice and LTE), to implement that LTE high-velocity data and LTE voice work at the same time.

Generally, as an example, a mobile phone supports the SGLTE technology, and the mobile phone needs at least two antennas, where one of the antennas needs to be used by both LTE and GSM. Therefore, a diplexer (Diplexer) technology needs to be used to aggregate a GSM signal and an LTE signal into a same antenna. An LTE bandwidth and a GSM bandwidth that are required by China Mobile are respectively: LTE Band 39 (UL/DL: 1880 MHz to 1920 MHz) and GSM 1800 (UL: 1710.2 MHz to 1784.8 MHz, DL: 1805.2 MHz to 1879.8 MHz). As can be seen, operating bands of the two signals are very close, and therefore, two signals having a shared band that are from a same antenna cannot be separately transmitted to back-ends of the GSM and the LTE properly by using a conventional diplexer (Diplexer) technology. WO 2010104767 A2 discloses a shared antenna architecture for multiple co-located radio modules.

### SUMMARY

Embodiments of the present invention provide a signal transmission method and system, and a controller according to the independent claims, which resolve a problem that two signals cannot share an antenna because of having a shared band when the two signals work at the same time.

It can be seen from the foregoing technical solutions that, the embodiments of the present invention have the following advantages.

In the embodiments of the present invention, a controller controls a single-pole double-throw switch by determining whether a signal status of a first signal with a higher priority satisfies a service requirement; and if the service requirement is not satisfied, guides a mixed signal of the first signal and a second signal that is received by an antenna to a processing back-end of the first signal by using the single-pole double-throw switch; or if the service requirement is satisfied, guides a mixed signal of the first signal and a second signal that is received by an antenna to a power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when two signals work at the same time, and a service requirement of a signal with a higher priority can be ensured. Therefore, user

### BRIEF DESCRIPTION OF DRAWINGS

FIG. 1 is a schematic diagram of an embodiment of a signal transmission method according to an embodiment of the present invention;
FIG. 2 is a schematic diagram of another embodiment of a signal transmission method according to an embodiment of the present invention;
FIG. 3 is a schematic diagram of another embodiment of a signal transmission method according to an embodiment of the present invention;
FIG. 4 is a schematic diagram of an embodiment of a controller according to an embodiment of the present invention;
FIG. 5 is a schematic diagram of another embodiment of a controller according to an embodiment of the present invention;
FIG. 6 is a schematic diagram of another embodiment of a controller according to an embodiment of the present invention; and
FIG. 7 is a schematic diagram of an embodiment of a signal transmission system according to an embodiment of the present invention.

### DESCRIPTION OF EMBODIMENTS

Embodiments of the present invention provide a signal transmission method and system, and a controller, so that two signals having a shared band can share an antenna when the two signals work at the same time. It should be noted that, all the embodiments of the present invention are applicable to a dual card dual standby dual pass application scenario in which a first signal and a second signal have a shared band and need to work at the same time.

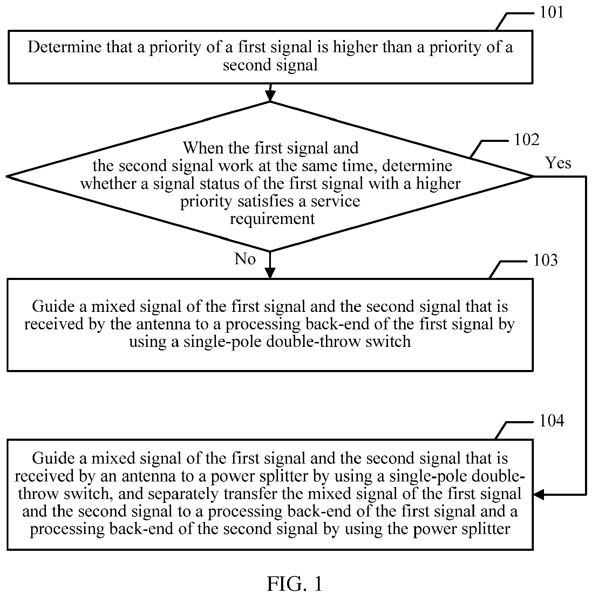

Referring to FIG. 1, a first signal and a second signal work at the same time and share an antenna, where the first signal and the second signal have a shared band, a radio frequency front-end includes the antenna, and the antenna is configured to receive and send a mixed signal of the first signal and the second signal. An embodiment of a signal transmission method according to an embodiment of the present invention includes:
101: A controller determines that a priority of the first signal is higher than a priority of the second signal. In this embodiment, the controller may determine that the priority of the first signal is higher than the priority of the second signal. In an actual application, a controller may determine priorities of two signals according to a service direction of a terminal in which the controller is located. For example, in an SGLTE solution of China Mobile Communications Corporation (CMCC, China Mobile Communications Corporation), a GSM signal and an LTE signal have a shared band, and if the terminal in which the controller is located is a mobile phone, the controller may determine that a priority of the GSM signal is higher than a priority of the LTE signal because a service direction of the mobile phone is a voice call; or if the terminal in which the controller is located is a tablet computer, the controller may determine that a priority of the LTE signal is higher than a priority of the GSM signal because a service direction of the tablet computer is data transmission. In an actual application, a controller may determine priorities of two signals according to how often a user uses the two signals. For example, in a dual card dual standby dual pass solution, a GSM signal and a Wideband Code Division Multiple Access (WCDMA, Wideband Code Division Multiple Access) signal have a shared band, and if the user uses a GSM frequently, the controller determines that a priority of the GSM signal is higher than a priority of the WCDMA signal; or if a terminal in which the controller is located is a customized terminal of an operator, and if the operator uses a GSM standard, the controller may determine that a priority of the GSM signal is higher than a priority of the WCDMA signal. How to determine priorities of two signals is not limited herein.

It should be noted that, the radio frequency front-end includes at least one antenna, and certainly, may further include another element, such as an antenna transmit-receive switch or a signal amplifier.

102: When the first signal and the second signal work at the same time, determine whether a signal status of the first signal with a higher priority satisfies a service requirement, and if the service requirement is not satisfied, perform step 103; or if the service requirement is satisfied, perform step 104.

In this embodiment, when the first signal and the second signal work at the same time, the controller determines whether the signal status of the first signal with a higher priority satisfies the service requirement. In an actual application, if the first signal is a GSM signal, the controller may determine whether a signal status of the GSM signal satisfies a voice call requirement; or if the first signal is an LTE signal, the controller may determine whether a signal status of the LTE signal satisfies a data transmission requirement.

103: Guide the mixed signal of the first signal and the second signal that is received by the antenna to a processing back-end of the first signal by using a single-pole double-throw switch.

In this embodiment, when the signal status of the first signal with a higher priority does not satisfy the service requirement, the controller may guide the mixed signal of the first signal and the second signal that is received by the antenna to the processing back-end of the first signal by using the single-pole double-throw switch. In an actual application, the mixed signal of the first signal and the second signal that is received by the antenna is guided to the processing back-end of the first signal by using the single-pole double-throw switch, and in this case, the mixed signal received by the antenna can be used only on a channel in which the first signal channel is located. In this way, the signal status of the first signal can satisfy the service requirement.

104: Guide the mixed signal of the first signal and the second signal that is received by the antenna to a power splitter by using the single-pole double-throw switch, and separately transfer the mixed signal of the first signal and the second signal to a processing back-end of the first signal and a processing back-end of the second signal by using the power splitter.

In this embodiment, when the signal status of the first signal with a higher priority satisfies the service requirement, the controller may guide the mixed signal of the first signal and the second signal that is received by the antenna to the power splitter by using the single-pole double-throw switch, and separately transfer the mixed signal of the first signal and the second signal to the processing back-end of the first signal and the processing back-end of the second signal by using the power splitter. In an actual application, the power splitter is a power divider, which is a component that divides energy of one input signal into energy of two or more output signals, where the energy of the two or more output signals are equal or unequal, or conversely, may synthesize energy of multiple signals into energy of one signal for output. Because there are two signals in this embodiment of the present invention, a one-to-two power splitter is used, and in this way, the mixed signal may be shared by channels in which the first signal and the second signal are located.

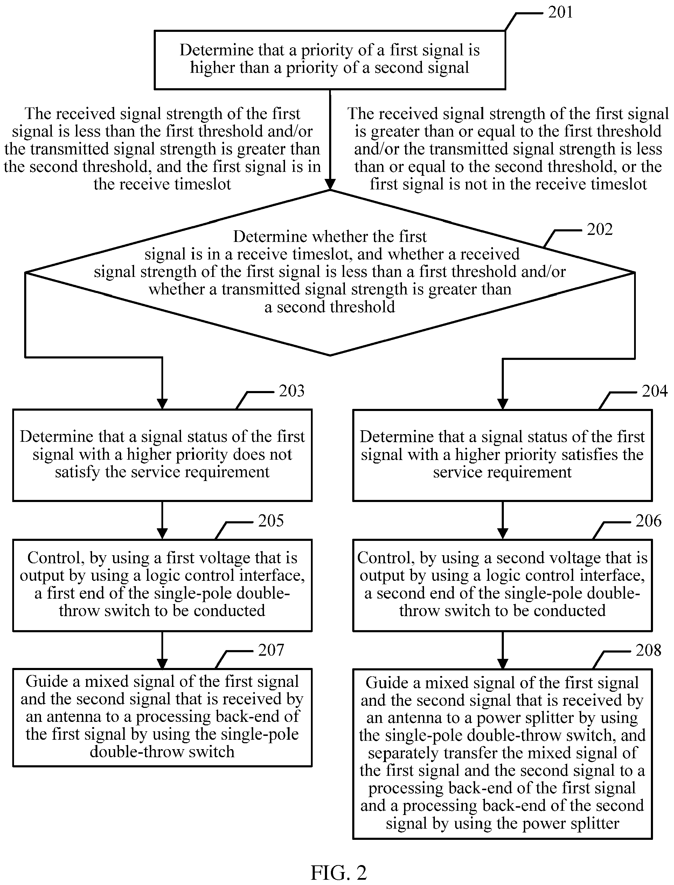

In this embodiment, a controller controls a single-pole double-throw switch by determining whether a signal status of a first signal with a higher priority satisfies a service requirement; and if the service requirement is not satisfied, guides a mixed signal of the first signal and a second signal that is received by an antenna to a processing back-end of the first signal by using the single-pole double-throw switch; or if the service requirement is satisfied, guides a mixed signal of the first signal and a second signal that is received by an antenna to a power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when the two signals work at the same time, and a service requirement of a signal with a higher priority can be ensured. Therefore, user experience is improved. For ease of understanding, the signal transmission method according to an embodiment of the present invention is described by using a specific example. Referring to FIG. 2, which shows another embodiment of a signal transmission method according to an embodiment of the present invention, a first signal and a second signal work at the same time and share an antenna, where the first signal and the second signal have a shared band, a radio frequency front-end includes the antenna, and the antenna is configured to receive and send a mixed signal of the first signal and the second signal. The method includes:
201: A controller determines that a priority of the first signal is higher than a priority of the second signal. In this embodiment, the controller may determine that the priority of the first signal is higher than the priority of the second signal. In an actual application, a controller may determine priorities of two signals according to a service direction of a terminal in which the controller is located. For example, in an SGLTE solution of CMCC, a GSM signal and an LTE signal have a shared band, and if the terminal in which the controller is located is a mobile phone, the controller may determine that a priority of the GSM signal is higher than a priority of the LTE signal because a service direction of the mobile phone is a voice call; or if the terminal in which the controller is located is a tablet computer, the controller may determine that a priority of the LTE signal is higher than a priority of the GSM signal because a service direction of the tablet computer is data transmission. In an actual application, a controller may also determine priorities of two signals according to how often a user uses the two signals. For example, in an SGLTE solution, a GSM signal and a Time Division-Synchronous Code Division Multiple Access (TDSCDMA, Time Division-Synchronous Code Division Multiple Access) signal have a shared band, and if the user uses a GSM frequently, the controller determines that a priority of the GSM signal is higher than a priority of the TDSCDMA signal. How to determine priorities of two signals is not limited herein.

This embodiment is described by using an example in which in an SGLTE solution of CMCC, a GSM signal and an LTE signal have a shared band, and a terminal in which the controller is located is a mobile phone. In this case, the first signal is the GSM signal, the second signal is the LTE signal, and a priority of the GSM signal is higher than a priority of the LTE signal.

202: Determine whether the first signal is in a receive timeslot, and whether a received signal strength of the first signal is less than a first threshold and/or whether a transmitted signal strength of the first signal is greater than a second threshold.

203: If the received signal strength of the first signal is less than the first threshold and/or the transmitted signal strength of the first signal is greater than the second threshold, and the first signal is in the receive timeslot, determine that a signal status of the first signal with a higher priority does not satisfy the service requirement.

204: If the received signal strength of the first signal is greater than or equal to the first threshold and/or the transmitted signal strength of the first signal is less than or equal to the second threshold, or the first signal is not in the receive timeslot, determine that a signal status of the first signal with a higher priority satisfies the service requirement.

In this embodiment, if the received signal strength of the first signal is less than the first threshold and/or the transmitted signal strength of the first signal is greater than the second threshold, and the first signal is in the receive timeslot, it is determined that the signal status of the first signal with a higher priority does not satisfy the service requirement, and then step 205 is performed. If any condition of the following three conditions is satisfied, it can be determined that the signal status of the first signal with a higher priority does not satisfy the service requirement:
A: the first signal is in the receive timeslot, and the received signal strength of the first signal is less than the first threshold or the transmitted signal strength of the first signal is greater than the second threshold; and
B: the first signal is in the receive timeslot, and the received signal strength of the first signal is less than the first threshold and the transmitted signal strength of the first signal is greater than the second threshold.

If the received signal strength of the first signal is greater than or equal to the first threshold and/or the transmitted signal strength of the first signal is less than or equal to the second threshold, or the first signal is not in the receive timeslot, it is determined that the signal status of the first signal with a higher priority satisfies the service requirement, and then step 206 is performed. If any one of the following conditions is satisfied, it can be determined according to this determining method that the signal status of the first signal with a higher priority satisfies the service requirement:
A: the received signal strength of the first signal is greater than or equal to the first threshold, and the received signal strength of the first signal is less than or equal to the second threshold;
B: the received signal strength of the first signal is greater than or equal to the first threshold;
C: the transmitted signal strength of the first signal is less than or equal to the second threshold; and
D: the first signal is not in the receive timeslot.

It should be noted that, when the first signal is not in the receive timeslot, the first signal is actually not received, and it is considered in this embodiment that the signal status of the first signal with a higher priority satisfies the service requirement.

For example, the GSM signal is determined in this embodiment. It is determined whether the GSM signal is in the receive timeslot, and whether a received signal strength of the GSM signal is less than the first threshold and/or whether the transmitted signal strength of the first signal is greater than the second threshold. Herein, the first threshold may be -103 dBm, and the second threshold may be 22 dBm. Values of the first threshold and the second threshold are not limited in an actual application.

205: Control, by using a first voltage that is output by using a logic control interface, a first end of the single-pole double-throw switch to be conducted.

206: Control, by using a second voltage that is output by using a logic control interface, a second end of the single-pole double-throw switch to be conducted.

In this embodiment, if the signal status of the first signal with a higher priority does not satisfy the service requirement, the controller controls, by using the first voltage that is output by using the logic control interface, the first end of the single-pole double-throw switch to be conducted; or if the signal status of the first signal with a higher priority satisfies the service requirement, the controller controls, by using the second voltage that is output by using the logic control interface, the second end of the single-pole double-throw switch to be conducted. In an actual application, a logic control interface is provided on a single-pole double-throw switch, and a controller may output, by using the logic control interface, two voltages: a high voltage and a low voltage. If a first voltage is a high voltage, a second voltage is a low voltage; or if a first voltage is a low voltage, a second voltage is a high voltage. The controller may control, according to a value of a voltage that is output by using the logic control interface, the single-pole double-throw switch to conduct an endpoint.

207: Guide the mixed signal of the first signal and the second signal that is received by the antenna to a processing back-end of the first signal by using the single-pole double-throw switch.

In this embodiment, after step 205, the controller may guide the mixed signal of the first signal and the second signal that is received by the antenna to the processing back-end of the first signal by using the single-pole double-throw switch. In an actual application, the mixed signal of the first signal and the second signal that is received by the antenna is guided to the processing back-end of the first signal by using the single-pole double-throw switch, and in this case, the mixed signal received by the antenna can be supplied only to the processing back-end of the first signal. In this way, the signal status of the first signal can satisfy the service requirement.

For example, in this embodiment, a mixed signal of the GSM signal and the LTE signal that is received by the antenna is guided to a processing back-end of the GSM signal by using the single-pole double-throw switch.

208: Guide the mixed signal of the first signal and the second signal that is received by the antenna to a power splitter by using the single-pole double-throw switch, and separately transfer the mixed signal of the first signal and the second signal to a processing back-end of the first signal and a processing back-end of the second signal by using the power splitter.

In this embodiment, after step 206, the controller may guide the mixed signal of the first signal and the second signal that is received by the antenna to the power splitter by using the single-pole double-throw switch, and separately transfer the mixed signal of the first signal and the second signal to the processing back-end of the first signal and the processing back-end of the second signal by using the power splitter. In an actual application, the power splitter is a power divider, which is a component that divides energy of one input signal into energy of two or more output signals, where the energy of the two or more output signals are equal or unequal, or conversely, may synthesize energy of multiple signals into energy of one signal for output. Because there are two signals in this embodiment of the present invention, a one-to-two power splitter is used, and in this way, the mixed signal may be shared by the processing back-end of the first signal and the processing back-end of the second signal.

For example, in this embodiment, a mixed signal of the GSM signal and the LTE signal that is received by the antenna is guided to the power splitter by using the single-pole double-throw switch, and then the mixed signal of the GSM signal and the LTE signal is separately transferred to a processing back-end of the GSM signal and a processing back-end of the LTE signal.

It should be noted that, the processing back-end of the first signal is mainly configured to retain only the first signal in the mixed signal of the first signal and the second signal, and the processing back-end of the second signal is mainly configured to retain only the second signal in the mixed signal of the first signal and the second signal. In an actual application, the processing back-end of the first signal or the processing back-end of the second signal are used for more than a signal filtering operation, and persons skilled in the art may also perform another operation, such as denoising or amplification, on the first signal or the second signal by using the processing back-end of the first signal or the processing back-end of the second signal, which is not limited herein.

In this embodiment, a controller controls a single-pole double-throw switch by determining whether a first signal is in a receive timeslot and whether a received signal strength of the first signal with a higher priority is less than a first threshold or whether a transmitted signal strength of the first signal is greater than a second threshold; if the service requirement is not satisfied, guides a mixed signal of the first signal and the second signal that is received by the antenna to a processing back-end of the first signal by using the single-pole double-throw switch; or if the service requirement is satisfied, guides a mixed signal of the first signal and the second signal that is received by the antenna to a power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when the two signals work at the same time, and a service requirement of a signal with a higher priority can be ensured. Therefore, user experience is improved.

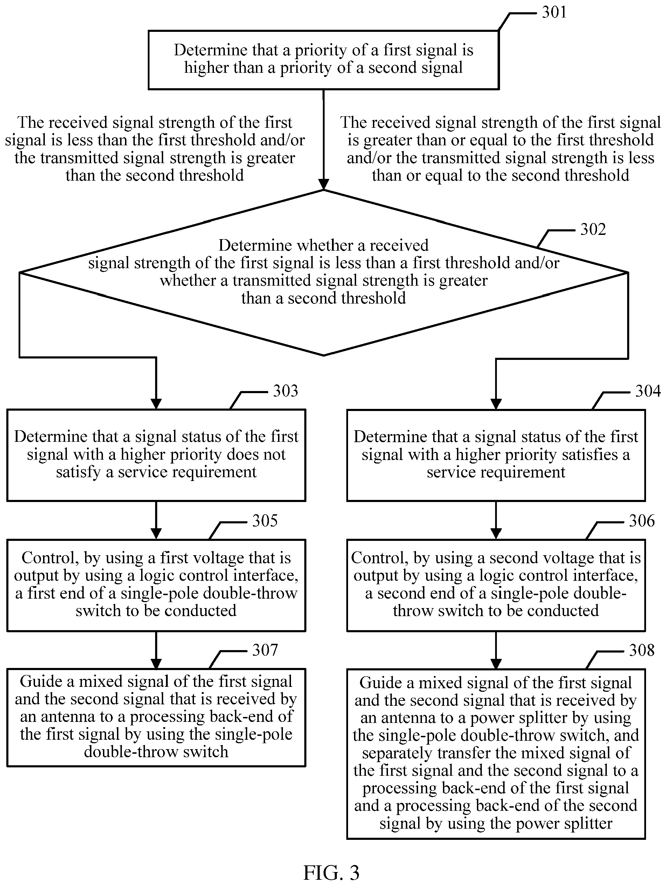

The signal transmission method according to an embodiment of the present invention is described by using a specific example. Referring to FIG. 3, which shows another embodiment of a signal transmission method according to an embodiment of the present invention, a first signal and a second signal work at the same time and share an antenna, where the first signal and the second signal have a shared band, a radio frequency front-end includes the antenna, and the antenna is configured to receive and send a mixed signal of the first signal and the second signal. The method includes:
301: A controller determines that a priority of the first signal is higher than a priority of the second signal. In this embodiment, the controller may determine that the priority of the first signal is higher than the priority of the second signal. In an actual application, a controller may determine priorities of two signals according to a service direction of a terminal in which the controller is located. For example, in an SGLTE solution of CMCC, a GSM signal and an LTE signal have a shared band, and if the terminal in which the controller is located is a mobile phone, the controller may determine that a priority of the GSM signal is higher than a priority of the LTE signal because a service direction of the mobile phone is a voice call; or if the terminal in which the controller is located is a tablet computer, the controller may determine that a priority of the LTE signal is higher than a priority of the GSM signal because a service direction of the tablet computer is data transmission. In an actual application, a controller may also determine priorities of two signals according to how often a user uses the two signals. For example, in a dual card dual standby dual pass solution, a GSM signal and a WCDMA signal have a shared band, and if the user uses a GSM frequently, the controller determines that a priority of the GSM signal is higher than a priority of the WCDMA signal. How to determine priorities of two signals is not limited herein.

302: Determine whether a received signal strength of the first signal is less than a first threshold and/or whether a transmitted signal strength of the first signal is greater than a second threshold.

303: If the received signal strength of the first signal is less than the first threshold and/or the transmitted signal strength of the first signal is greater than the second threshold, determine that a signal status of the first signal with a higher priority does not satisfy the service requirement.

304: If the received signal strength of the first signal is greater than or equal to the first threshold and/or the transmitted signal strength of the first signal is less than or equal to the second threshold, determine that a signal status of the first signal with a higher priority satisfies the service requirement.

In this embodiment, the controller may determine whether the received signal strength of the first signal is less than the first threshold and/or whether the transmitted signal strength of the first signal is greater than the second threshold, and if the received signal strength of the first signal is less than the first threshold and/or the transmitted signal strength of the first signal is less than the first threshold, determine that the signal status of the first signal with a higher priority does not satisfy the service requirement, and then perform step 305; or if the received signal strength of the first signal is greater than or equal to the first threshold and/or the transmitted signal strength of the first signal is less than or equal to the second threshold, determine that the signal status of the first signal with a higher priority satisfies the service requirement, and then perform step 306.

Step 305 to step 308 are the same as step 205 to step 208 in the second embodiment, and details are not described herein again.

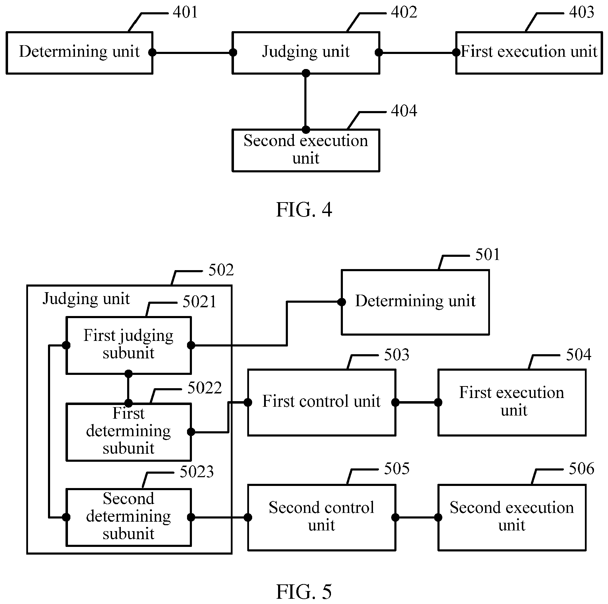

A controller, for performing the foregoing signal transmission method, according to an embodiment of the present invention is described below, and for a basic logical structure of the controller, refer to FIG. 4, which shows an embodiment of a controller according to an embodiment of the present invention, where a first signal and a second signal work at the same time and share an antenna, where the first signal and the second signal have a shared band, a radio frequency front-end includes the antenna, and the antenna is configured to receive and send a mixed signal of the first signal and the second signal. The controller includes:
a determining unit 401, a judging unit 402, a first execution unit 403, and a second execution unit 404.

The determining unit 401 is configured to determine that a priority of the first signal is higher than a priority of the second signal.

The judging unit 402 is configured to: when the first signal and the second signal work at the same time, determine whether a signal status of the first signal with a higher priority satisfies a service requirement. The first execution unit 403 is configured to: when the service requirement is not satisfied, guide the mixed signal of the first signal and the second signal that is received by the antenna to a processing back-end of the first signal by using a single-pole double-throw switch.

The second execution unit 404 is configured to: if the service requirement is satisfied, guide the mixed signal of the first signal and the second signal that is received by the antenna to a power splitter by using the single-pole double-throw switch, and separately transfer the mixed signal of the first signal and the second signal to the processing back-end of the first signal and a processing back-end of the second signal by using the power splitter.

In this embodiment, the controller controls the single-pole double-throw switch by using the judging unit 402 to determine whether a signal status of a first signal with a higher priority satisfies a service requirement; and if the service requirement is not satisfied, the first execution unit 403 guides a mixed signal of the first signal and the second signal that is received by the antenna to a processing back-end of the first signal by using the single-pole double-throw switch; or if the service requirement is satisfied, the second execution unit 404 guides a mixed signal of the first signal and the second signal that is received by the antenna to the power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when the two signals work at the same time, and a service requirement of a signal with a higher priority can be ensured. Therefore, user experience is improved.

A manner of exchanging data in a server is described below by using a specific embodiment and according to interaction between modules and units that are included in a controller according to an embodiment of the present invention. Referring to FIG. 5, the controller includes:
a determining unit 501, a judging unit 502, a first control unit 503, a second control unit 504, a first execution unit 505, and a second execution unit 506.

The judging unit 502 includes: a first judging subunit 5021, a first determining subunit 5022, and a second determining subunit 5023.

The determining unit 501 determines that a priority of the first signal is higher than a priority of the second signal, and then informs the first judging subunit 5021 that the priority of the first signal is high. In an actual application, the determining unit 501 may determine priorities of two signals according to a service direction of a terminal in which the controller is located. For example, in an SGLTE solution of CMCC, a GSM signal and an LTE signal have a shared band, and if the terminal in which the controller is located is a mobile phone, because a service direction of the mobile phone is a voice call, the determining unit 501 may determine that a priority of the GSM signal is higher than a priority of the LTE signal; or if the terminal in which the controller is located is a tablet computer, because a service direction of the tablet computer is data transmission, the determining unit 501 may determine that a priority of the LTE signal is higher than a priority of the GSM signal. In an actual application, the determining unit 501 may also determine priorities of two signals according to how often a user uses the two signals. For example, in an SGLTE solution, a GSM signal and a TDSCDMA signal have a shared band, and if the user uses a GSM frequently, the determining unit 501 determines that a priority of the GSM signal is higher than a priority of the TDSCDMA signal. How to determine priorities of two signals is not limited herein.

The first judging subunit 5021 determines whether the first signal is in a receive timeslot, and whether a received signal strength of the first signal with a higher priority is less than a first threshold and/or whether a transmitted signal strength of the first signal is greater than a second threshold, and informs the first determining subunit 5022 if the received signal strength of the first signal is less than the first threshold and/or the transmitted signal strength of the first signal is greater than the second threshold, and the first signal is in the receive timeslot; or informs the second determining subunit 5023 if the received signal strength of the first signal is greater than or equal to the first threshold and/or the transmitted signal strength of the first signal is less than or equal to the second threshold, or the first signal is not in the receive timeslot.

If the received signal strength of the first signal is less than the first threshold and/or the transmitted signal strength of the first signal is greater than the second threshold, and the first signal is in the receive timeslot, the first determining subunit 5022 determines that a signal status of the first signal with a higher priority does not satisfy the service requirement, and then informs the first control unit 503 that the signal status of the first signal with a higher priority does not satisfy the service requirement.

If the received signal strength of the first signal is greater than or equal to the first threshold and/or the transmitted signal strength of the first signal is less than or equal to the second threshold, or the first signal is not in the receive timeslot, the second determining subunit 5023 determines that a signal status of the first signal with a higher priority satisfies the service requirement, and then informs the second control unit 504 that the signal status of the first signal with a higher priority satisfies the service requirement.

It should be noted that, when the first signal is not in a receive timeslot, the first signal is actually not received, and it is considered in this embodiment that the signal status of the first signal with a higher priority satisfies the service requirement.

The first control unit 503 controls, by using a first voltage that is output by using a logic control interface, a first end of the single-pole double-throw switch to be conducted.

The second control unit 504 controls, by using a second voltage that is output by using the logic control interface, a second end of the single-pole double-throw switch to be conducted.

In an actual application, a logic control interface is provided on a single-pole double-throw switch, and a controller may output, by using the logic control interface, two voltages: a high voltage and a low voltage. If a first voltage is a high voltage, a second voltage is a low voltage; or if a first voltage is a low voltage, a second voltage is a high voltage. The controller may control, according to a value of a voltage that is output by using the logic control interface, the single-pole double-throw switch to conduct an endpoint. The first execution unit 505 guides a mixed signal of the first signal and the second signal that is received by the antenna to a processing back-end of the first signal by using the single-pole double-throw switch. In an actual application, the mixed signal of the first signal and the second signal that is received by the antenna is guided to the processing back-end of the first signal by using the single-pole double-throw switch, and in this case, the mixed signal received by the antenna can be supplied only to the processing back-end of the first signal. In this way, the signal status of the first signal can satisfy the service requirement.

The second execution unit 506 guides the mixed signal of the first signal and the second signal that is received by the antenna to a power splitter by using the single-pole double-throw switch, and separately transfers the mixed signal of the first signal and the second signal to the processing back-end of the first signal and the processing back-end of the second signal by using the power splitter. In an actual application, the power splitter is a power divider, which is a component that divides energy of one input signal into energy of two or more output signals, where the energy of the two or more output signals are equal or unequal, or conversely, may synthesize energy of multiple signals into energy of one signal for output. Because there are two signals in this embodiment of the present invention, a one-to-two power splitter is used, and in this way, the mixed signal may be shared by the processing back-end of the first signal and the processing back-end of the second signal.

In this embodiment, the controller determines, by using the first judging subunit 5021, whether the first signal is in a receive timeslot, and whether a received signal strength of the first signal with a higher priority is less than a first threshold and/or whether a transmitted signal strength of the first signal is greater than a second threshold, the first determining subunit 5022 or the second determining subunit 5023, and the first control unit 503 or the second control unit 504 control the single-pole double-throw switch according to a result of the determining by the first judging subunit 5021, where if the service requirement is not satisfied, the first execution unit 505 guides a mixed signal of the first signal and the second signal that is received by the antenna to a processing back-end of the first signal by using the single-pole double-throw switch; or if the service requirement is satisfied, the second execution unit 506 guides a mixed signal of the first signal and the second signal that is received by the antenna to the power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when the two signals work at the same time, and a service requirement of a signal with a higher priority can be ensured. Therefore, user experience is improved.

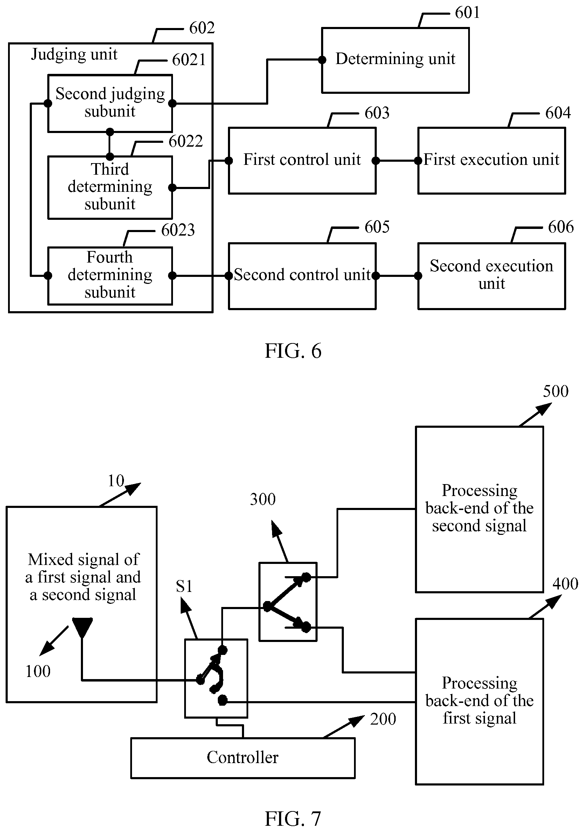

A manner of exchanging data in a server is described below by using a specific embodiment and according to interaction between modules and units that are included in a controller according to an embodiment of the present invention. Referring to FIG. 6, the controller includes:
a determining unit 601, a judging unit 602, a first control unit 603, a second control unit 604, a first execution unit 605, and a second execution unit 606.

The judging unit 602 includes: a second judging subunit 6021, a third determining subunit 6022, and a fourth determining subunit 6023.

The determining unit 601 determines that a priority of the first signal is higher than a priority of the second signal, and then informs the second judging subunit 6021 that the priority of the first signal is high. In an actual application, the determining unit 601 may determine priorities of two signals according to a service direction of a terminal in which the controller is located. For example, in an SGLTE solution of CMCC, a GSM signal and an LTE signal have a shared band, and if the terminal in which the controller is located is a mobile phone, the determining unit 601 may determine that a priority of the GSM signal is higher than a priority of the LTE signal because a service direction of the mobile phone is a voice call; or if the terminal in which the controller is located is a tablet computer, the determining unit 601 may determine that a priority of the LTE signal is higher than a priority of the GSM signal because a service direction of the tablet computer is data transmission. In an actual application, the determining unit 601 may also determine priorities of two signals according to how often a user uses the two signals. For example, in a dual card dual standby dual pass solution, a GSM signal and a WCDMA signal have a shared band, and if the user uses a GSM frequently, the determining unit 601 determines that a priority of the GSM signal is higher than a priority of the WCDMA signal. How to determine priorities of two signals is not limited herein.

The second judging subunit 6021 determines whether a received signal strength of the first signal is less than a first threshold and/or whether a transmitted signal strength of the first signal is greater than a second threshold, and informs the third determining subunit 6022 if the received signal strength of the first signal is less than the first threshold and/or the transmitted signal strength of the first signal is greater than the second threshold; or informs the fourth determining subunit 6023 if the received signal strength of the first signal is greater than or equal to the first threshold and/or the transmitted signal strength of the first signal is less than or equal to the second threshold.

If the received signal strength of the first signal is less than the first threshold and/or the transmitted signal strength of the first signal is greater than the second threshold, the third determining subunit 6022 determines that a signal status of the first signal with a higher priority does not satisfy the service requirement, and then informs the first control unit 603 that the signal status of the first signal with a higher priority does not satisfy the service requirement.

If the received signal strength of the first signal is greater than or equal to the first threshold and/or the transmitted signal strength of the first signal is less than or equal to the second threshold, the fourth determining subunit 6023 determines that a signal status of the first signal with a higher priority satisfies the service requirement, and then informs the second control unit 604 that the signal status of the first signal with a higher priority satisfies the service requirement.

Operations performed by the first control unit 603, the second control unit 604, the first execution unit 605, and the second execution unit 606 are the same as operations performed by the first control unit 503, the second control unit 504, the first execution unit 505, and the second execution unit 506 in the foregoing embodiment, and details are not described herein again.

It should be noted that, because a receive timeslot needs to be determined, the foregoing embodiment is applicable only to two signals in a TD standard that have a shared band, but this embodiment is applicable to any two signals having a shared band because only a signal strength is determined.

In this embodiment, the controller determines, by using the second judging subunit 6021 whether the first signal is in a receive timeslot, and whether a received signal strength of the first signal with a higher priority is less than a first threshold and/or whether a transmitted signal strength of the first signal is greater than a second threshold, the third determining subunit 6022 or the fourth determining subunit 6023, and the first control unit 603 or the second control unit 604 control the single-pole double-throw switch according to a result of the determining by the second judging subunit 6021, where if the service requirement is not satisfied, the first execution unit 605 guides a mixed signal of the first signal and the second signal that is received by the antenna to a processing back-end of the first signal by using the single-pole double-throw switch; or if the service requirement is satisfied, the second execution unit 606 guides a mixed signal of the first signal and the second signal that is received by the antenna to the power splitter by using the single-pole double-throw switch, and separately transfers the mixed signal of the first signal and the second signal to a processing back-end of the first signal and a processing back-end of the second signal by using the power splitter. In this way, two signals having a shared band can share an antenna when the two signals work at the same time, and a service requirement of a signal with a higher priority can be ensured. Therefore, user experience is improved.

A signal transmission system according to an embodiment of the present invention is described below. Refer to FIG. 7, which shows an embodiment of a signal transmission system according to an embodiment of the present invention. The system includes:
a controller 200, a single-pole double-throw switch S1, a power splitter 300, a radio frequency front-end 10, a processing back-end 400 of a first signal, and a processing back-end 500 of a second signal.

The radio frequency front-end 10 includes an antenna 100.

A common end of the single-pole double-throw switch S1 is connected to the antenna 100, a first end of the single-pole double-throw switch S1 is connected to the processing back-end 400 of the first signal, and a second end of the single-pole double-throw switch S1 is connected to an input end of the power splitter 300.

A first output end of the power splitter 300 is connected to the processing back-end 400 of the first signal, and a second output end of the power splitter 300 is connected to the processing back-end 500 of the second signal.

The antenna 100 is configured to receive and send a mixed signal of the first signal and the second signal. The controller 200 is configured to determine that a priority of the first signal is higher than a priority of the second signal.

The controller 200 is further configured to: when the first signal and the second signal work at the same time, determine whether a signal status of the first signal with a higher priority satisfies a service requirement; and when the service requirement is not satisfied, control the first end of the single-pole double-throw switch S1 to be conducted.

The processing back-end 400 of the first signal or the processing back-end 500 of the second signal is configured to process the mixed signal of the first signal and the second signal that is sent by the antenna 100.

The controller 200 is configured to: when the service requirement is satisfied, control the second end of the single-pole double-throw switch S1 to be conducted.

The power splitter 300 is configured to receive, by using the input end of the power splitter 300, the mixed signal of the first signal and the second signal that is sent by the antenna 100, and separately transfer the received mixed signal of the first signal and the second signal to the processing back-end 400 of the first signal and the processing back-end 500 of the second signal.

A specific working principle of the signal transmission system according to an embodiment of the present invention is described below. Still refer to FIG. 7, which shows another embodiment of a signal transmission system according to an embodiment of the present invention. The system includes:
a controller 200, a single-pole double-throw switch S1, a power splitter 300, a radio frequency front-end 10, a processing back-end 400 of a first signal, and a processing back-end 500 of a second signal, where the radio frequency front-end 10 includes an antenna 100.

A common end of the single-pole double-throw switch S1 is connected to the antenna 100, a first end of the single-pole double-throw switch S1 is connected to the processing back-end 400 of the first signal, and a second end of the single-pole double-throw switch S1 is connected to an input end of the power splitter 300.

A first output end of the power splitter 300 is connected to the processing back-end 400 of the first signal, and a second output end of the power splitter 300 is connected to the processing back-end 500 of the second signal.

The controller 200 determines that a priority of the first signal is higher than a priority of the second signal. When the first signal and the second signal work at the same time, the controller 200 determines whether the first signal is in a receive timeslot, and whether a received signal strength of the first signal with a higher priority is less than a first threshold and/or whether a transmitted signal strength of the first signal is greater than a second threshold.

If the received signal strength of the first signal is less than the first threshold and/or the transmitted signal strength of the first signal is greater than the second threshold, and the first signal is in the receive timeslot, the controller 200 determines that a signal status of the first signal with a higher priority does not satisfy the service requirement, and then the controller 200 outputs a first voltage to the single-pole double-throw switch S1 by using a logic control interface (not shown in the figure), to control the first end of the single-pole double-throw switch S1 to be conducted. When the first end of the single-pole double-throw switch S1 is conducted, a mixed signal of the first signal and the second signal that is received by the antenna 100 enters the processing back-end 400 of the first signal through the first end of the single-pole double-throw switch, and then the processing back-end 400 of the first signal processes the mixed signal of the first signal and the second signal. In an actual application, the processing back-end of the first signal may filter out the second signal and retain only the first signal.

If the received signal strength of the first signal is greater than or equal to the first threshold and/or the transmitted signal strength of the first signal is less than or equal to the second threshold, or the first signal is not in the receive timeslot, the controller 200 determines that a signal status of the first signal with a higher priority satisfies the service requirement, and then the controller 200 outputs a second voltage to the single-pole double-throw switch S1 by using a logic control interface, to control the second end of the single-pole double-throw switch S1 to be conducted. A mixed signal of the first signal and the second signal that is received by the antenna 100 enters the input end of the power splitter 300 through the second end of the single-pole double-throw switch, and then the power splitter 300 separately transfers the mixed signal of the first signal and the second signal to the processing back-end of the first signal and the processing back-end of the second signal through the first output end and the second output end of the power splitter 300. Then the processing back-end 400 of the first signal and the processing back-end 500 of the second signal separately process respective received mixed signals of the first signal and the second signal. In an actual application, the processing back-end 400 of the first signal may filter out the second signal and retain only the first signal, and the processing back-end 500 of the second signal may filter out the first signal and retain only the second signal.

In this embodiment, the controller 200 determines whether the first signal is in a receive timeslot and whether a received signal strength of the first signal is less than a first threshold and/or whether a transmitted signal strength of the first signal is greater than a second threshold, and controls the single-pole double-throw switch according to different results of the determining. If the service requirement is not satisfied, the controller 200 guides a mixed signal of the first signal and the second signal that is received by the antenna 100 to the processing back-end 400 of the first signal by using the single-pole double-throw switch S1; or if the service requirement is satisfied, the controller 200 guides a mixed signal of the first signal and the second signal that is received by the antenna 100 to the power splitter 300 by using the single-pole double-throw switch S1, and separately transfers the mixed signal of the first signal and the second signal to the processing back-end 400 of the first signal and the processing back-end 500 of the second signal by using the power splitter 300. In this way, two signals having a shared band can share an antenna when the two signals work at the same time, and a service requirement of a signal with a higher priority can be ensured. Therefore, user experience is improved.

Still refer to FIG. 7, which shows another embodiment of a signal transmission system according to an embodiment of the present invention. The system includes:
a controller 200, a single-pole double-throw switch S1, a power splitter 300, a radio frequency front-end 10, a processing back-end 400 of a first signal, and a processing back-end 500 of a second signal, where the radio frequency front-end 10 includes an antenna 100.

Connection relationships of components herein are the same as connection relationships in the foregoing embodiment, and details are not described herein again.

The controller 200 determines that a priority of the first signal is higher than a priority of the second signal. When the first signal and the second signal work at the same time, the controller 200 determines whether a received signal strength of the first signal is less than a first threshold and/or whether a transmitted signal strength of the first signal is greater than a second threshold.

When the received signal strength of the first signal is less than the first threshold and/or the transmitted signal strength is greater than the second threshold, the controller 200 determines that a signal status of the first signal with a higher priority does not satisfy the service requirement, and then the controller 200 outputs a first voltage to the single-pole double-throw switch S1 by using a logic control interface, to control a first end of the single-pole double-throw switch S1 to be conducted. When the first end of the single-pole double-throw switch S1 is conducted, a mixed signal of the first signal and the second signal that is received by the antenna 100 enters the processing back-end 400 of the first signal through the first end of the single-pole double-throw switch, and then the processing back-end 400 of the first signal processes the mixed signal of the first signal and the second signal. In an actual application, the processing back-end of the first signal may filter out the second signal and retain only the first signal.

When the received signal strength of the first signal is greater than or equal to the first threshold and/or the transmitted signal strength of the first signal is less than or equal to the second threshold, the controller 200 determines that a signal status of the first signal with a higher priority satisfies the service requirement, and then the controller 200 outputs a second voltage to the single-pole double-throw switch S1 by using a logic control interface, to control a second end of the single-pole double-throw switch S1 to be conducted. A mixed signal of the first signal and the second signal that is received by the antenna 100 enters an input end of the power splitter 300 through the second end of the single-pole double-throw switch, and then the power splitter 300 separately transfers the mixed signal of the first signal and the second signal to the processing back-end 400 of the first signal and the processing back-end 500 of the second signal through a first output end and a second output end of the power splitter 300. Then the processing back-end 400 of the first signal and the processing back-end 500 of the second signal separately process respective received mixed signals of the first signal and the second signal. In an actual application, the processing back-end 400 of the first signal may filter out the second signal and retain only the first signal, and the processing back-end 500 of the second signal may filter out the first signal and retain only the second signal.

In this embodiment, the controller 200 determines whether a received signal strength of the first signal is less than a first threshold and/or whether a transmitted signal strength of the first signal is greater than a threshold, and controls the single-pole double-throw switch according to different results of the determining. If the service requirement is not satisfied, the controller 200 guides a mixed signal of the first signal and the second signal that is received by the antenna 100 to the processing back-end 400 of the first signal by using the single-pole double-throw switch S1; or if the service requirement is satisfied, the controller 200 guides a mixed signal of the first signal and the second signal that is received by the antenna 100 to the power splitter 300 by using the single-pole double-throw switch S1, and separately transfers the mixed signal of the first signal and the second signal to the processing back-end 400 of the first signal and the processing back-end 500 of the second signal by using the power splitter 300. In this way, two signals having a shared band can share an antenna when the two signals work at the same time, and a service requirement of a signal with a higher priority can be ensured. Therefore, user experience is improved.

It should be noted that, the controller in this embodiment of the present invention may be a baseband processor of a terminal, and the baseband processor outputs the first voltage or the second voltage to the single-pole double-throw switch by using the logic control interface. In an actual application, the baseband processor may output the first voltage or the second voltage to the single-pole double-throw switch by using the logic control interface according to a running program.

It should be further noted that, a position of the controller is not limited to a position in FIG. 7. In an actual application, the controller 200 in FIG. 7 may be an independent controller, or the controller, the processing back-end 400 of the first signal, and the processing back-end 500 of the second signal may also form a large processor.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A signal transmission method, wherein a first signal and a second signal work at the same time and share an antenna, wherein the first signal and the second signal have a shared band, a radio frequency front-end comprises the antenna, and the antenna is configured to receive and send a mixed signal of the first signal and the second signal; and the method comprises:
determining (201), by a controller, that a priority of the first signal is higher than a priority of the second signal;
when the first signal and the second signal work at the same time, determining whether a signal status of the first signal with a higher priority satisfies a service requirement; and
if the service requirement is not satisfied, guiding the mixed signal of the first signal and the second signal that is received by the antenna to a processing back-end of the first signal by using a single-pole double-throw switch; or
if the service requirement is satisfied, guiding the mixed signal of the first signal and the second signal that is received by the antenna to a power splitter by using the single-pole double-throw switch, and separately transferring the mixed signal of the first signal and the second signal to a processing back-end of the first signal and a processing back-end of the second signal by using the power splitter;
wherein the determining whether a signal status of the first signal with a higher priority satisfies a service requirement specifically comprises the following steps:
determining (202) whether the first signal is in a receive timeslot, and whether a received signal strength of the first signal is less than a first threshold and/or whether a transmitted signal strength is greater than a second threshold; and
if the received signal strength of the first signal is less than the first threshold and/or the transmitted signal strength is greater than the second threshold, and the first signal is in the receive timeslot, determining (203) that the signal status of the first signal with a higher priority does not satisfy the service requirement; or
if the received signal strength of the first signal is greater than or equal to the first threshold and/or the transmitted signal strength is less than or equal to the second threshold, or the first signal is not in the receive timeslot, determining (205) that the signal status of the first signal with a higher priority satisfies the service requirement.

2. The method according to claim 1, wherein after the determining whether a signal status of the first signal with a higher priority satisfies a service requirement, the method further comprises the following steps:
if the signal status of the first signal with a higher priority does not satisfy the service requirement, controlling (205), by using a first voltage that is output by using a logic control interface, a first end of the single-pole double-throw switch to be conducted; or
if the signal status of the first signal with a higher priority satisfies the service requirement, controlling (206), by using a second voltage that is output by using a logic control interface, a second end of the single-pole double-throw switch to be conducted.

3. A controller, wherein a first signal and a second signal work at the same time and share an antenna, wherein the first signal and the second signal have a shared band, a radio frequency front-end comprises the antenna, and the antenna is configured to receive and send a mixed signal of the first signal and the second signal; and the controller comprises:
a determining unit (501), configured to determine that a priority of the first signal is higher than a priority of the second signal;
a judging unit (502), configured to: when the first signal and the second signal work at the same time, determine whether a signal status of the first signal with a higher priority satisfies a service requirement;
a first execution unit (505), configured to: when the service requirement is not satisfied, guide the mixed signal of the first signal and the second signal that is received by the antenna to a processing back-end of the first signal by using a single-pole double-throw switch; and
a second execution unit (506), configured to: when the service requirement is satisfied, guide the mixed signal of the first signal and the second signal that is received by the antenna to a power splitter by using the single-pole double-throw switch, and separately transfer the mixed signal of the first signal and the second signal to the processing back-end of the first signal and a processing back-end of the second signal by using the power splitter;
wherein the judging unit (502) comprises:
a first judging subunit (5021), configured to determine whether the first signal is in a receive timeslot, and whether a received signal strength of the first signal with a higher priority is less than a first threshold and/or whether a transmitted signal strength is greater than a second threshold;
a first determining subunit (5022), configured to: if the received signal strength of the first signal is less than the first threshold and/or the transmitted signal strength is greater than the second threshold, and the first signal is in the receive timeslot, determine that the signal status of the first signal with a higher priority does not satisfy the service requirement; and
a second determining subunit (5023), configured to: if the received signal strength of the first signal is greater than or equal to the first threshold and/or the transmitted signal strength is less than or equal to the second threshold, or the first signal is not in the receive timeslot, determine that the signal status of the first signal with a higher priority satisfies the service requirement.

4. The controller according to claim 3, wherein the controller further comprises:
a first control unit (503), configured to: when the signal status of the first signal with a higher priority does not satisfy the service requirement, control, by using a first voltage that is output by using a logic control interface, a first end of the single-pole double-throw switch to be conducted; and
a second control unit (504), configured to: when the signal status of the first signal with a higher priority satisfies the service requirement, control, by using a second voltage that is output by using the logic control interface, a second end of the single-pole double-throw switch to be conducted.

5. A signal transmission system, wherein a first signal and a second signal have a shared band, and the system comprises: a controller (200), a single-pole double-throw switch (S1), a power splitter (300), a radio frequency front-end (10), a processing back-end (400) of the first signal, and a processing back-end (500) of the second signal, wherein
the radio frequency front-end (10) comprises an antenna (100);
a common end of the single-pole double-throw switch (S1) is connected to the antenna (100), a first end of the single-pole double-throw switch (S1) is connected to the processing back-end (400) of the first signal, and a second end of the single-pole double-throw switch (S1) is connected to an input end of the power splitter (300);
a first output end of the power splitter (300) is connected to the processing back-end (400) of the first signal, and a second output end of the power splitter (300) is connected to the processing back-end (500) of the second signal;
the antenna (100) is configured to receive and send a mixed signal of the first signal and the second signal;
the controller (200) is configured to execute the following procedure:
determining that a priority of the first signal is higher than a priority of the second signal;
when the first signal and the second signal work at the same time, determining whether a signal status of the first signal with a higher priority satisfies a service requirement;
when the service requirement is not satisfied, controlling the first end of the single-pole double-throw switch (S1) to be conducted; or
when the service requirement is satisfied, controlling the second end of the single-pole double-throw switch (S1) to be conducted;
the power splitter (300) is configured to receive, by using the input end of the power splitter (300), the mixed signal of the first signal and the second signal that is sent by the antenna (100), and separately transfer the received mixed signal of the first signal and the second signal to the processing back-end of the first signal and the processing back-end of the second signal; and
the processing back-end of the first signal or the processing back-end of the second signal is configured to process the mixed signal of the first signal and the second signal that is sent by the antenna (100);
wherein the controller (200) is configured to execute the following procedure:
determining whether the first signal is in a receive timeslot, and whether a received signal strength of the first signal with a higher priority is less than a first threshold and/or whether a transmitted signal strength is greater than a second threshold; and
if the received signal strength of the first signal is less than the first threshold and/or the transmitted signal strength is greater than the second threshold, and the first signal is in the receive timeslot, determining that the signal status of the first signal with a higher priority does not satisfy the service requirement; or
if the received signal strength of the first signal is greater than or equal to the first threshold and/or the transmitted signal strength is less than or equal to the second threshold, or the first signal is not in the receive timeslot, determining that the signal status of the first signal with a higher priority satisfies the service requirement.

6. The system according to claim 5, wherein
the controller (200) is further configured to: when the signal status of the first signal with a higher priority does not satisfy the service requirement, conduct the first end of the single-pole double-throw switch (S1) by using a first voltage that is output to the single-pole double-throw switch (S1) by using a logic control interface; and
the controller (200) is further configured to: when the signal status of the first signal with a higher priority satisfies the service requirement, conduct the second end of the single-pole double-throw switch (S1) by using a second voltage that is output to the single-pole double-throw switch (S1) by using the logic control interface.

## Patentansprüche

1. Signalübertragungsverfahren, wobei ein erstes Signal und ein zweites Signal gleichzeitig arbeiten und eine Antenne gemeinsam nutzen, wobei das erste Signal und das zweite Signal ein gemeinsam genutztes Band aufweisen, ein Hochfrequenz-Frontend die Antenne umfasst und die Antenne ausgelegt ist, ein gemischtes Signal des ersten Signals und des zweiten Signals zu empfangen und zu senden; und wobei das Verfahren umfasst:
Bestimmen (201), durch eine Steuerung, dass eine Priorität des ersten Signals höher als eine Priorität des zweiten Signals ist;
wenn das erste Signal und das zweite Signal gleichzeitig arbeiten, Bestimmen, ob ein Signalstatus des ersten Signals mit einer höheren Priorität eine Dienstanforderung erfüllt; und
wenn die Dienstanforderung nicht erfüllt ist, Führen des gemischten Signals des ersten Signals und des zweiten Signals, das durch die Antenne empfangen wird, zu einem Verarbeitungsbackend des ersten Signals unter Verwendung eines einpoligen Umschalters; oder
wenn die Dienstanforderung erfüllt ist, Führen des gemischten Signals des ersten Signals und des zweiten Signals, das durch die Antenne empfangen wird, zu einem Leistungsteiler unter Verwendung eines einpoligen Umschalters, und
separates Übertragen des gemischten Signals des ersten Signals und des zweiten Signals an ein Verarbeitungsbackend des ersten Signals und ein Verarbeitungsbackend des zweiten Signals unter Verwendung des Leistungsteilers;
wobei das Bestimmen, ob ein Signalstatus des ersten Signals mit einer höheren Priorität eine Dienstanforderung erfüllt, insbesondere die folgenden Schritte umfasst:
Bestimmen (202), ob das erste Signal in einem Empfangszeitfenster ist, und ob eine empfangene Signalstärke des ersten Signals kleiner ist als ein erster Schwellenwert und/oder ob eine übertragene Signalstärke größer ist als ein zweiter Schwellenwert; und
wenn die empfangene Signalstärke des ersten Signals kleiner ist als der erste Schwellenwert und/oder ob die übertragene Signalstärke größer ist als der zweite Schwellenwert, und das erste Signal in dem Empfangszeitfenster ist, Bestimmen (203), dass der Signalstatus des ersten Signals mit einer höheren Priorität nicht die Dienstanforderung erfüllt; oder
wenn die empfangene Signalstärke des ersten Signals größer als oder gleich dem ersten Schwellenwert ist und/oder die übertragene Signalstärke kleiner als oder gleich dem zweite Schwellenwert ist, oder das erste Signal nicht in dem Empfangszeitfenster ist, Bestimmen (205), dass der Signalstatus des ersten Signals mit einer höheren Priorität die Dienstanforderung erfüllt.

2. Verfahren nach Anspruch 1, wobei nach dem Bestimmen, ob ein Signalstatus des ersten Signals mit einer höheren Priorität eine Dienstanforderung erfüllt, das Verfahren ferner die folgenden Schritte umfasst:
wenn der Signalstatus des ersten Signals mit einer höheren Priorität nicht die Dienstanforderung erfüllt, Steuern (205), unter Verwendung einer ersten Spannung, die unter Verwendung einer Logiksteuerungsschnittstelle ausgegeben wird, eines zu leitenden ersten Endes des einpoligen Umschalters; oder
wenn der Signalstatus des ersten Signals mit einer höheren Priorität die Dienstanforderung erfüllt, Steuern (206), unter Verwendung einer zweiten Spannung, die unter Verwendung einer Logiksteuerungsschnittstelle ausgegeben wird, eines zu leitenden zweiten Endes des einpoligen Umschalters.

3. Steuerung, wobei ein erstes Signal und ein zweites Signal gleichzeitig arbeiten und eine Antenne gemeinsam nutzen, wobei das erste Signal und das zweite Signal ein gemeinsam genutztes Band aufweisen, ein Hochfrequenz-Frontend die Antenne umfasst und die Antenne ausgelegt ist, ein gemischtes Signal des ersten Signals und des zweiten Signals zu empfangen und zu senden; und wobei die Steuerung umfasst:
eine Bestimmungeinheit (501), die ausgelegt ist, zu bestimmen, dass eine Priorität des ersten Signals höher als eine Priorität des zweiten Signals ist;
eine Beurteilungseinheit (502), die zu Folgendem ausgelegt ist: wenn das erste Signal und das zweite Signal gleichzeitig arbeiten, Bestimmen, ob ein Signalstatus des ersten Signals mit einer höheren Priorität eine Dienstanforderung erfüllt;
eine erste Ausführungseinheit (505), die zu Folgendem ausgelegt ist: wenn die Dienstanforderung nicht erfüllt ist, Führen des gemischten Signals des ersten Signals und des zweiten Signals, das durch die Antenne empfangen wird, zu einem Verarbeitungsbackend des ersten Signals unter Verwendung eines einpoligen Umschalters; und
eine zweite Ausführungseinheit (506), die zu Folgendem ausgelegt ist: wenn die Dienstanforderung erfüllt ist, Führen des gemischten Signals des ersten Signals und des zweiten Signals, das durch die Antenne empfangen wird, zu einem Leistungsteiler unter Verwendung eines einpoligen Umschalters, und separates Übertragen des gemischten Signals des ersten Signals und des zweiten Signals an das Verarbeitungsbackend des ersten Signals und ein Verarbeitungsbackend des zweiten Signals unter Verwendung des Leistungsteilers;
wobei die Beurteilungseinheit (502) umfasst:
eine erste Beurteilungsuntereinheit (5021), die ausgelegt ist zum Bestimmen, ob das erste Signal in einem Empfangszeitfenster ist, und ob eine empfangene Signalstärke des ersten Signals mit einer höheren Priorität kleiner ist als ein erster Schwellenwert und/oder ob eine übertragene Signalstärke größer ist als ein zweiter Schwellenwert;
eine erste Bestimmungsuntereinheit (5022), die zu Folgendem ausgelegt ist: wenn die empfangene Signalstärke des ersten Signals kleiner ist als der erste Schwellenwert und/oder die übertragene Signalstärke größer ist als der zweite Schwellenwert, und das erste Signal in dem Empfangszeitfenster ist, Bestimmen, dass der Signalstatus des ersten Signals mit einer höheren Priorität nicht die Dienstanforderung erfüllt; und
eine zweite Bestimmungsuntereinheit (5023), die zu Folgendem ausgelegt ist: wenn die empfangene Signalstärke des ersten Signals größer als oder gleich dem ersten Schwellenwert ist und/oder die übertragene Signalstärke kleiner als oder gleich dem zweiten Schwellenwert ist, oder das erste Signal nicht in dem Empfangszeitfenster ist, Bestimmen, dass der Signalstatus des ersten Signals mit einer höheren Priorität die Dienstanforderung erfüllt.

4. Steuerung nach Anspruch 3, wobei die Steuerung ferner umfasst:
eine erste Steuereinheit (503), die zu Folgendem ausgelegt ist: wenn der Signalstatus des ersten Signals mit einer höheren Priorität nicht die Dienstanforderung erfüllt, Steuern, unter Verwendung einer ersten Spannung, die unter Verwendung einer Logiksteuerungsschnittstelle ausgegeben wird, eines zu leitenden ersten Endes des einpoligen Umschalters; und
eine zweite Steuereinheit (504), die zu Folgendem ausgelegt ist: wenn der Signalstatus des ersten Signals mit einer höheren Priorität die Dienstanforderung erfüllt, Steuern, unter Verwendung einer zweiten Spannung, die unter Verwendung der Logiksteuerungsschnittstelle ausgegeben wird, eines zu leitenden zweiten Endes des einpoligen Umschalters.

5. Signalübertragungssystem, wobei ein erstes Signal und ein zweites Signal ein gemeinsam genutztes Band aufweisen, und wobei das System umfasst: eine Steuerung (200), einen einpoligen Umschalter (Sl), einen Leistungsteiler (300), ein Hochfrequenz-Frontend (10), ein Verarbeitungsbackend (400) des ersten Signals, und ein Verarbeitungsbackend (500) des zweiten Signals, wobei
das Hochfrequenz-Frontend (10) eine Antenne (100) umfasst;
ein gemeinsames Ende des einpoligen Umschalters (S1) mit der Antenne (100) verbunden ist, ein erstes Ende des einpoligen Umschalters (S1) mit dem Verarbeitungsbackend (400) des ersten Signals verbunden ist, und ein zweites Ende des einpoligen Umschalters (S1) mit einem Eingangsende des Leistungsteilers (300) verbunden ist;
ein erstes Ausgangsende des Leistungsteilers (300) mit dem Verarbeitungsbackend (400) des ersten Signals verbunden ist, und ein zweites Ausgangsende des Leistungsteilers (300) mit dem Verarbeitungsbackend (500) des zweiten Signals verbunden ist;
die Antenne (100) ausgelegt ist, ein gemischtes Signal des ersten Signals und des zweiten Signals zu empfangen und zu senden;
die Steuerung (200) ausgelegt ist, den folgenden Vorgang auszuführen:
Bestimmen, dass eine Priorität des ersten Signals höher als eine Priorität des zweiten Signals ist;
wenn das erste Signal und das zweite Signal gleichzeitig arbeiten, Bestimmen, ob ein Signalstatus des ersten Signals mit einer höheren Priorität eine Dienstanforderung erfüllt;
wenn die Dienstanforderung nicht erfüllt ist, Steuern des zu leitenden ersten Endes des einpoligen Umschalters (S1); oder
wenn die Dienstanforderung erfüllt ist, Steuern des zu leitenden zweiten Endes des einpoligen Umschalters (S1);
der Leistungsteiler (300) ausgelegt ist zum Empfangen, unter Verwendung des Eingangsendes des Leistungsteilers (300), des gemischtes Signals des ersten Signals und des zweiten Signals, das durch die Antenne (100) gesendet wird, und zum separaten Übertragen des empfangenen gemischten Signals des ersten Signals und des zweiten Signals an das Verarbeitungsbackend des ersten Signals und das Verarbeitungsbackend des zweiten Signals; und
das Verarbeitungsbackend des ersten Signals oder das Verarbeitungsbackend des zweiten Signals ausgelegt ist, das gemischte Signal des ersten Signals und des zweiten Signals, das durch die Antenne (100) gesendet wird, zu verarbeiten;
wobei die Steuerung (200) ausgelegt ist, den folgenden Vorgang auszuführen:
Bestimmen, ob das erste Signal in einem Empfangszeitfenster ist, und ob eine empfangene Signalstärke des ersten Signals mit einer höheren Priorität kleiner ist als ein erster Schwellenwert und/oder ob eine übertragene Signalstärke größer ist als ein zweiter Schwellenwert; und
wenn die empfangene Signalstärke des ersten Signals kleiner ist als der erste Schwellenwert und/oder ob die übertragene Signalstärke größer ist als der zweite Schwellenwert, und das erste Signal in dem Empfangszeitfenster ist, Bestimmen, dass der Signalstatus des ersten Signals mit einer höheren Priorität nicht die Dienstanforderung erfüllt; oder
wenn die empfangene Signalstärke des ersten Signals größer als oder gleich dem ersten Schwellenwert ist und/oder die übertragene Signalstärke kleiner als oder gleich dem zweite Schwellenwert ist, oder das erste Signal nicht in dem Empfangszeitfenster ist, Bestimmen, dass der Signalstatus des ersten Signals mit einer höheren Priorität die Dienstanforderung erfüllt.

6. System nach Anspruch 5, wobei
die Steuerung (200) ferner zu Folgendem ausgelegt ist: wenn der Signalstatus des ersten Signals mit einer höheren Priorität nicht die Dienstanforderung erfüllt, Leiten des ersten Endes des einpoligen Umschalters (S1) unter Verwendung einer ersten Spannung, die unter Verwendung einer Logiksteuerungsschnittstelle an den einpoligen Umschalter (S1) ausgegeben wird; und
die Steuerung (200) ferner zu Folgendem ausgelegt ist: wenn der Signalstatus des ersten Signals mit einer höheren Priorität die Dienstanforderung erfüllt, Leiten des zweiten Endes des einpoligen Umschalters (S1) unter Verwendung einer zweiten Spannung, die unter Verwendung der Logiksteuerungsschnittstelle an den einpoligen Umschalter (S1) ausgegeben wird.

## Revendications

1. Procédé d'émission de signal, un premier signal et un second signal fonctionnant en même temps et partageant une antenne, le premier signal et le second signal ayant une bande partagée, une extrémité frontale radiofréquence comprenant l'antenne, et l'antenne étant configurée pour recevoir et envoyer un signal mélangé du premier signal et du second signal ; et le procédé comprenant :
la détermination (201), par un dispositif de commande, qu'une priorité du premier signal est supérieure à une priorité du second signal ;
lorsque le premier signal et le second signal fonctionnent en même temps, la détermination si un état de signal du premier signal ayant une priorité plus élevée satisfait une exigence de service ; et
si l'exigence de service n'est pas satisfaite, le guidage du signal mélangé du premier signal et du second signal qui est reçu par l'antenne à une extrémité de traitement arrière du premier signal à l'aide d'un commutateur unipolaire bidirectionnel ; ou
si l'exigence de service est satisfaite, le guidage du signal mélangé du premier signal et du second signal qui est reçu par l'antenne à un diviseur de puissance à l'aide du commutateur unipolaire bidirectionnel, et
le transfert séparé du signal mélangé du premier signal et du second signal à une extrémité de traitement arrière du premier signal et à une extrémité de traitement arrière du second signal à l'aide du diviseur de puissance ;
la détermination du fait de savoir si un état de signal du premier signal ayant une priorité plus élevée satisfait une exigence de service comprenant spécifiquement les étapes suivantes :
déterminer (202) si le premier signal est dans un créneau temporel de réception, et si une intensité de signal reçue du premier signal est inférieure à a premier seuil et/ou si une intensité de signal émise est supérieure à un second seuil ; et
si l'intensité de signal reçue du premier signal est inférieure au premier seuil et/ou l'intensité de signal émise est supérieure au second seuil, et le premier signal est dans le créneau temporel de réception, déterminer (203) que l'état de signal du premier signal ayant une priorité plus élevée ne satisfait pas l'exigence de service ; ou
si l'intensité de signal reçue du premier signal est supérieure ou égale au premier seuil et/ou l'intensité de signal émise est inférieure ou égale au second seuil, ou le premier signal n'est pas dans l'intervalle de temps de réception, déterminer (205) que l'état de signal du premier signal ayant une priorité plus élevée satisfait l'exigence de service.

2. Procédé selon la revendication 1, après la détermination du fait de savoir si un état de signal du premier signal ayant une priorité supérieure satisfait une exigence de service, le procédé comprenant en outre les étapes suivantes :
si l'état de signal du premier signal ayant une priorité supérieure ne satisfait pas l'exigence de service, commander (205), à l'aide d'une première tension qui est délivrée en sortie à l'aide d'une interface de commande logique, une première extrémité du commutateur unipolaire bidirectionnel à être conduite ; ou
si l'état de signal du premier signal ayant une priorité plus élevée satisfait l'exigence de service, commander (206), à l'aide d'une seconde tension qui est délivrée en sortie à l'aide d'une interface de commande logique, une seconde extrémité du commutateur unipolaire bidirectionnel à être conduite.

3. Dispositif de commande, un premier signal et un second signal fonctionnant en même temps et partageant une antenne, le premier signal et le second signal ayant une bande partagée, une extrémité frontale radiofréquence comprenant l'antenne, et l'antenne étant configurée pour recevoir et envoyer un signal mélangé du premier signal et du second signal ; et le dispositif de commande comprenant :
une unité de détermination (501), configurée pour déterminer qu'une priorité du premier signal est supérieure à une priorité du second signal ;
une unité d'évaluation (502), configurée pour :
lorsque le premier signal et le second signal fonctionnent en même temps, déterminer si un état de signal du premier signal ayant une priorité plus élevée satisfait une exigence de service ;
une première unité d'exécution (505), configurée pour :
lorsque l'exigence de service n'est pas satisfaite, guider le signal mélangé du premier signal et du second signal qui est reçu par l'antenne à une extrémité de traitement arrière du premier signal à l'aide d'un commutateur unipolaire bidirectionnel ; et
une seconde unité d'exécution (506) configurée pour :
lorsque l'exigence de service est satisfaite, guider le signal mélangé du premier signal et du second signal qui est reçu par l'antenne à un diviseur de puissance à l'aide du commutateur unipolaire bidirectionnel, et transférer séparément le signal mélangé du premier signal et du second signal à l'extrémité de traitement arrière du premier signal et à une extrémité de traitement arrière du second signal, à l'aide du diviseur de puissance ;
l'unité d'évaluation (502) comprenant :
une première sous-unité d'évaluation (5021), configurée pour déterminer si le premier signal est dans un créneau temporel de réception, et si une intensité de signal reçue du premier signal ayant une priorité supérieure est inférieure à un premier seuil et/ou si une intensité de signal émise est supérieure à un second seuil ;
une première sous-unité de détermination (5022), configurée pour :
si l'intensité de signal reçue du premier signal est inférieure au premier seuil et/ou que l'intensité de signal émise est supérieure au second seuil, et que le premier signal est dans le créneau temporel de réception, déterminer que l'état de signal du premier signal ayant une priorité plus élevée ne satisfait pas l'exigence de service ; et
une seconde sous-unité de détermination (5023), configurée pour :
si l'intensité de signal reçue du premier signal est supérieure ou égale au premier seuil et/ou que l'intensité de signal émise est inférieure ou égale au second seuil, ou que le premier signal n'est pas dans le créneau temporel de réception, déterminer que l'état de signal du premier signal ayant une priorité plus élevée satisfait l'exigence de service.

4. Dispositif de commande selon la revendication 3, le dispositif de commande comprenant en outre :
une première unité de commande (503), configurée pour :
lorsque l'état de signal du premier signal ayant une priorité supérieure ne satisfait pas l'exigence de service, commander, à l'aide d'une première tension qui est délivrée en sortie à l'aide d'une interface de commande logique, une première extrémité du commutateur unipolaire bidirectionnel de façon à ce qu'elle soit conduite ; et
une seconde unité de commande (504), configurée pour :
lorsque l'état de signal du premier signal ayant une priorité plus élevée satisfait l'exigence de service, commander, à l'aide d'une seconde tension qui est délivrée en sortie à l'aide de l'interface de commande logique, une seconde extrémité du commutateur unipolaire bidirectionnel de façon à ce qu'elle soit conduite.

5. Système d'émission de signal, un premier signal et un second signal ayant une bande partagée, et le système comprenant :
un dispositif de commande (200), un commutateur unipolaire bidirectionnel (S1), un diviseur de puissance (300), une extrémité frontale radiofréquence (10), une extrémité de traitement arrière (400) du premier signal, et une extrémité de traitement arrière (500) du second signal,
l'extrémité frontale radiofréquence (10) comprenant une antenne (100) ;
une extrémité commune du commutateur unipolaire bidirectionnel (S1) étant connectée à l'antenne (100), une première extrémité du commutateur unipolaire bidirectionnel (S1) étant connectée à l'extrémité de traitement arrière (400) du premier signal, et une seconde extrémité du commutateur unipolaire bidirectionnel (S1) étant connectée à une extrémité d'entrée du diviseur de puissance (300) ;
une première extrémité de sortie du diviseur de puissance (300) étant connectée à l'extrémité de traitement arrière (400) du premier signal, et une seconde extrémité de sortie du diviseur de puissance (300) étant connectée à l'extrémité de traitement arrière (500) du second signal ;
l'antenne (100) étant configurée pour recevoir et envoyer un signal mélangé du premier signal et du second signal ;
le dispositif de commande (200) étant configuré pour exécuter la procédure suivante :
déterminer qu'une priorité du premier signal est supérieure à une priorité du second signal ;
lorsque le premier signal et le second signal fonctionnent en même temps, déterminer si un état de signal du premier signal ayant une priorité supérieure satisfait une exigence de service,
lorsque l'exigence de service n'est pas satisfaite, commander la première extrémité du commutateur unipolaire bidirectionnel (S1) de façon à ce qu'elle soit conduite ; ou
lorsque l'exigence de service est satisfaite, commander la seconde extrémité du commutateur unipolaire bidirectionnel (S1) de façon à ce qu'elle soit conduite ;
le diviseur de puissance (300) étant configuré pour recevoir, à l'aide de l'extrémité d'entrée du diviseur de puissance (300), le signal mélangé du premier signal et du second signal qui est envoyé par l'antenne (100), et transférer séparément le signal mélangé reçu du premier signal et du second signal à l'extrémité de traitement arrière du premier signal et à l'extrémité de traitement arrière du second signal ; et
l'extrémité de traitement arrière du premier signal ou l'extrémité de traitement arrière du second signal étant configurée pour traiter le signal mélangé du premier signal et du second signal qui est envoyé par l'antenne (100) ;
le dispositif de commande (200) étant configuré pour exécuter la procédure suivante :
déterminer si le premier signal est dans un créneau temporel de réception, et si une intensité de signal reçue du premier signal avec une priorité plus élevée est inférieure à un premier seuil et/ou si une intensité de signal émise est supérieure à un second seuil ; et
si l'intensité de signal reçue du premier signal est inférieure au premier seuil et/ou l'intensité de signal émise est supérieure au second seuil, et le premier signal est dans le créneau temporel de réception, déterminer que l'état de signal du premier signal ayant une priorité plus élevée ne satisfait pas l'exigence de service ; ou
si l'intensité de signal reçue du premier signal est supérieure ou égale au premier seuil et/ou l'intensité de signal émise est inférieure ou égale au second seuil, ou le premier signal n'est pas dans le créneau temporel de réception, déterminer que l'état de signal du premier signal ayant une priorité plus élevée satisfait l'exigence de service.

6. Système selon la revendication 5,
le dispositif de commande (200) étant en outre configuré pour :
lorsque l'état de signal du premier signal ayant une priorité supérieure ne satisfait pas l'exigence de service, conduire la première extrémité du commutateur unipolaire bidirectionnel (S1) à l'aide d'une première tension qui est délivrée en sortie au commutateur unipolaire bidirectionnel (S1) à l'aide d'une interface de commande logique ; et
le dispositif de commande (200) étant en outre configuré pour :
lorsque l'état de signal du premier signal ayant une priorité supérieure satisfait l'exigence de service, conduire la seconde extrémité du commutateur unipolaire bidirectionnel (S1) à l'aide d'une seconde tension qui est délivrée en sortie au commutateur unipolaire bidirectionnel (S1) à l'aide de l'interface de commande logique.
